# EUROPEAN PATENT APPLICATION

(11) **EP 4 756 965 A1**
(43) Date of publication of application: **10.06.2026**
(21) Application number: 24848086.5
(22) Date of filing: 23.07.2024
(51) Int. Cl.: H01M 10/0567, H01M 10/0525

(54) **NEGATIVE ELECTRODE-FREE LITHIUM METAL BATTERY, AND PREPARATION METHOD THEREFOR AND USE THEREOF**

(30) Priority: 31.07.2023 CN 202310954543
(71) Applicant: Westlake University, Hangzhou, Zhejiang 310030 (CN)
(72) Inventor: WANG, Jianhui, Hangzhou, Zhejiang 310030 (CN); LIU, Lei, Hangzhou, Zhejiang 310030 (CN)
(74) Representative: Petraz, Gilberto Luigi
(86) International application number: PCT/CN2024/106930
(87) International publication number: WO 2025/026128

(57) **Abstract**

An anode-free lithium metal battery, and preparation method and use thereof. The anode-free lithium metal battery comprises: a cathode comprising a cathode current collector and a cathode active material layer containing a lithium replenishment agent; an anode current collector; an electrolyte comprising at least one boron-containing lithium salt and a fluorinated amide compound solvent; and a separator. The fluorinated amide electrolyte and the lithium replenishment agent are used in combination, so that when the anode-free lithium metal battery is charged for the first time, a thin lithium layer with a dense deposition structure can be form in situ on the anode current collector, and serves as an additional lithium reservoir for offsetting irreversible lithium loss, thereby the anode-free lithium metal battery has a significantly improved cycle life while maintaining high energy density.

## Description

### Technical Field

The present invention belongs to the technical field of anode-free lithium battery, and particularly relates to a high energy density anode-free lithium metal battery, preparation method therefor and use thereof.

### Background Art

Anode-free lithium metal batteries structurally eliminate the need for traditional graphite/silicon-carbon or excessive lithium metal, avoiding the safety risks associated with the use of chemically active lithium metal, simplifying the production process with reduced costs, and minimizing battery weight and volume to provide maximized energy density so that high energy density can be achieved even on ordinary cathodes. Furthermore, this system does not need to consider anode capacity/cathode capacity ratio (i.e., N/P ratio), and can be assembled in a fully discharged state by assembly of a lithiated cathode and an anode current collector without an active material, making the production process safer and simpler.

Despite the significant advantages and promising applications of anode-free lithium metal batteries, lithium metal still faces severe challenges in terms of the reversibility of electro-plating/stripping. In particular, active lithium will be inevitably consumed when solid electrolyte interphase (SEI), dendrites, and "dead lithium" are formed. Since there is no additional lithium reservoir to offset irreversible lithium loss, the anode-free lithium metal battery has an extremely short cycle life, making it difficult to meet the requirements of practical applications.

Therefore, it is a core scientific problem for extending the cycle life of anode-free lithium metal batteries to improve the reversibility of lithium metal plating/stripping on current collectors, requiring systematic research at multiple levels, from battery materials to battery design. Among these, optimization of electrolyte is one of the most critical factors affecting the cycle performance of anode-free lithium metal batteries. In recent years, research on novel electrolytes has effectively improved the cycle life of anode-free lithium metal batteries. For example, Yi Cui et al. designed a fluorinated ether electrolyte (1 mol/L LiFSI in FDMB) that enabled a 325 Wh/kg anode-free lithium metal pouch cell (Cu∥NCM811) to retain 80% of its capacity after 70 cycles (Nat. Energy 2020, 5, 526-533). Jun Liu et al. used a localized high-concentration electrolyte (1.5 mol/L LiFSI in DME-TTE) that enabled a 350 Wh/kg anode-free lithium metal pouch cell (Cu∥NCM622) to retain 80% of its capacity after 100 cycles (Nat. Energy 2021, 6, 723-732).

Another approach to improving the cycle life of anode-free lithium metal batteries is to utilize lithium replenishment from the cathode side, i.e., to mitigate the degradation of anode-free lithium metal batteries by adding an additional lithium source. For example, in terms of using conventional lithium replenishment agents, Shengshui Zhang et al. added 10 wt.% of Li₂CuO₂ as a lithium replenishment agent in the cathode side, so that the anode-free lithium metal battery retained 80% of its capacity after 50 cycles (Electrochem. Commun. 2018, 89, 23-26). Bing Joe Hwang et al. added 20 wt.% of lithium oxalate (Li₂C₂O₄) as a lithium replenishment agent in the cathode side, so that the anode-free lithium metal battery retained 80% of its capacity after 50 cycles (ACS Appl. Mater. Interfaces 2022, 14, 23, 26724-26732). It is apparent that conventional lithium replenishment agents, even introduced at an amount of 20 wt.%, do not significantly improve the cycle life of anode-free lithium metal batteries. In terms of special lithium replenishment methods, Liumin Suo et al. reported a lithium-rich Li₂[Ni_{0.8}Co_{0.1}Mn_{0.1}]O₂ (Li₂NCM811) cathode with higher lithium content in lattice of a ternary cathode material. The Li₂NCM811 cathode, which stores nearly twice the amount of lithium source as ordinary NCM811, in combination with a high-concentration electrolyte (6 mol/L LiFSI in DME), increased the capacity retention of a 0.060 Ah monolayer anode-free lithium metal pouch cell from 38% to 84% after 100 cycles (Angew. Chem. Int. Ed. 2021, 60, 8289-8296). However, such lithium-rich cathode material was prepared by reacting NCM811 with highly hazardous n-butyllithium in an inert atmosphere, which increases the difficulty and practical cost of large-scale preparation. Furthermore, the small-capacity single-layer cell structure has an energy density of <300 Wh/kg, making it difficult for practical application. Haoshen Zhou et al. achieved a 320 Wh/kg, 2.46 Ah anode-free lithium metal pouch cell with a capacity retention of 80% after 300 cycles by adding 18.2 wt.% of lithium oxide as a lithium replenishment agent in the cathode side (where the cathode active material accounting for only 71%) and combining with a dual-salt ether-based electrolyte containing a HFE additive (1 mol/L LiTFSI + 1.5 mol/L LiFSI in G3-HFE) so as to obtain the additional lithium reservoir generated from Li₂O decomposition on the Cu current collector during the first charge (Nat. Energy 2021, 6, 653-662). However, this system produced a large amount of oxygen, which can react exothermically with the fresh lithium metal deposited on the anode, increasing the safety risk. At the same time, the use of a large amount of Li₂O reduces the energy density of the battery, which inevitably undermines the advantages of anode-free lithium metal batteries in terms of safety and energy density.

Therefore, it is a key challenge that urgently needs to improve the cycle life of anode-free lithium metal batteries through further optimization of the battery's internal material system without affecting energy density, manufacturing cost, and the requirements of large-scale production.

### Summary of the invention

Starting from design of an internal material system of a battery, the present inventors use a combination of a novel fluorinated amide electrolyte with a lithium replenishment agent in an anode-free lithium metal battery so that a thin lithium layer with a dense deposition structure is formed in situ on the anode current collector during the first charge of the battery, and serves as an additional lithium reservoir to offset irreversible lithium loss, thereby significantly improving the cycle life of the anode-free lithium metal battery while maintaining high energy density.

The objective of the invention is achieved through the following technical solution.

In one aspect, the present invention provides an anode-free lithium metal battery.

In another aspect, the present invention provides a method for preparing the anode-free lithium metal battery.

In still another aspect, the present invention provides use of the anode-free lithium metal battery in an electronic device, a smart grid, or an electric vehicle.

According to one aspect of the present invention, provided is an anode-free lithium metal battery, comprising:
a cathode comprising a cathode current collector and a cathode active material layer containing a lithium replenishment agent;
an anode current collector;
an electrolyte comprising at least one boron-containing lithium salt and a fluorinated amide compound solvent; and
a separator.

### I. Cathode

In the invention, the cathode comprises a cathode current collector and a cathode active material layer formed on the cathode current collector.

There are no particular limitations on the cathode current collector, it can be any conventional cathode current collector used in lithium batteries, including a metal current collector, such as one selected from or an alloy of two or more selected from aluminum, titanium, nickel, and iron, preferably aluminum foil; a non-metal current collector, such as one or two or more selected from carbon fiber cloth, carbon fiber paper, graphite paper, and conductive organic polymers, preferably carbon fiber paper; and a metal-polymer composite current collector, such as one with a three-layer structure, where the middle layer is a polymer film and the upper and lower layers are metal coatings, wherein the polymer may be one or two or more of polycarbonate, polystyrene, polyethylene terephthalate, acrylonitrile-butadiene-styrene copolymer, polyvinyl chloride, polypropylene, polyethylene, polyvinylidene chloride, polybenzimidazole, ethylene-vinyl acetate copolymer, polyimide, polyimide-triphenyl phosphate copolymer, and polyurethane, preferably polyimide-triphenyl phosphate copolymer with flame-retardant properties. The cathode current collector is preferably a composite current collector of aluminum and polyimide-triphenyl phosphate copolymer, such as an aluminum-plated composite current collector of polyimide-triphenyl phosphate copolymer. The composite current collector can effectively enhance safety performance of the battery, reduce raw material costs, and increase energy density of the battery. The cathode current collector may have a thickness of 1-100 µm, preferably 1-20 µm.

The cathode active material layer of the present invention comprises a cathode active material and a lithium replenishment agent. Furthermore, the cathode active material layer may simultaneously comprise: a conductive material for facilitating the smooth movement of electrons in the cathode; a binder for increasing the adhesion between cathode active materials or between the cathode active material and the cathode current collector; the cathode active material; and the lithium replenishment agent.

There are no particular limitations on the cathode active material; it can be any conventional cathode active material used in lithium batteries, including a ternary lithium nickel-cobalt-manganese oxide cathode material, such as one or two or more of Li[Ni_{0.5}Mn_{0.2}Co_{0.3}]O₂ (NCM523), Li[Ni_{0.6}Mn_{0.2}Co_{0.2}]O₂ (NCM622), Li[Ni_{0.8}Mn_{0.1}Co_{0.1}]O₂ (NCM811), and Li[Ni_{0.9}Mn_{0.05}Co_{0.05}]O₂ (NCM955), a lithium-rich manganese-based cathode material (LMR), a lithium nickel manganese oxide cathode material (LNMO), a lithium iron phosphate cathode material (LiFePO₄), a lithium manganese oxide cathode material (LiMn₂O₄), a lithium manganese iron phosphate cathode material (LMFP), a lithium cobalt oxide cathode material (LiCoO₂), and a lithium sulfide cathode material (Li₂S), but is not limited thereto. Preferably, the cathode uses a ternary lithium nickel cobalt manganese oxide cathode material with different nickel contents (NCM523, NCM622, NCM811, NCM955), especially NCM811.

Based on the total weight of the cathode active material layer, the cathode active material may be contained in an amount of 80 wt% to 99 wt%. If the amount of cathode active material is less than this range, the energy density of the battery will decrease. If the amount of cathode active material exceeds this range, the content of lithium replenishment agent is too low, resulting in an insignificant improvement in battery cycle life.

The lithium replenishment agent is a lithium-containing compound with a lithium-ion release capability and an irreversible capacity of > 50%, including binary lithium-containing compounds such as Li₂O, Li₂O₂, Li₃N, Li₂S, Li₂C₂O₄, etc., preferably Li₂C₂O₄; lithium-rich compounds, such as Li₂Ni₁₋ₓMₓO₂, where 0 ≤ x < 1, and M is at least one selected from Mn, Fe, Co, Cu, Zn, Mg, and Cd, Li₅Fe₁₋ₓNₓO₄ where 0 ≤ x < 1, and N is at least one selected from Mn, Ni, Co, Cu, Zn, Mg, Cd, etc., preferably the lithium replenishment agent is one or two of Li₂NiO₂ and Li₅FeO₄.

Based on the total weight of the cathode active material layer, the lithium replenishment agent may be contained in an amount of 0.5 wt% to 20 wt%, preferably 2 wt% to 10 wt%. Similarly, if the amount of lithium replenishment agent is less than this range, the improvement of battery cycle life will be insignificant. If the amount of lithium replenishment agent exceeds this range, it will not only reduce energy density but may also cause other battery performance degradation, such as cycle life, power, and safety.

Furthermore, the conductive material can be a carbon-based material, such as carbon black, acetylene black, Ketjen black, or carbon nanotubes; or a conductive polymer, such as polyaniline, polythiophene, polyacetylene, or polypyrrole. Based on the total weight of the cathode active material layer, the conductive material may be contained in an amount of 0.1 wt% to 5 wt%.

In addition, the binder can be polyvinyl acetate, polyvinyl alcohol, polyethylene oxide, polyvinylpyrrolidone, alkylated polyethylene oxide, cross-linked polyethylene oxide, polyvinyl ether, polymethyl methacrylate, polyvinylidene fluoride, polyhexafluoropropylene and polyvinylidene fluoride copolymers (product name: Kynar), polyethyl acrylate, polytetrafluoroethylene, polyvinyl chloride, polyacrylonitrile, polyvinylpyridine, polystyrene or their derivatives, blends and copolymers. Based on the total weight of the cathode active material layer, it is preferable that the binder is contained in an amount of 0.1 wt% to 5 wt%.

### II. Anode current collector

In this invention, the anode current collector does not contain any anode active material, hence the battery is called an anode-free battery.

The anode current collector includes a metal current collector, such as one selected from or an alloy of two or more selected from copper, nickel, cobalt, titanium and iron, preferably copper foil; a non-metal current collector, such as one or two or more of carbon fiber cloth, carbon fiber paper, graphite paper, conductive organic polymers, etc., preferably graphite paper; and a metal-polymer composite current collector, such as one with a three-layer structure, where the middle layer is a polymer film and the upper and lower layers are metal coatings, wherein the polymer may be one or two or more of polycarbonate, polystyrene, polyethylene terephthalate, acrylonitrile-butadiene-styrene copolymer, polyvinyl chloride, polypropylene, polyethylene, polyvinylidene chloride, polybenzimidazole, ethylene-vinyl acetate copolymer, polyimide, polyimide-triphenyl phosphate copolymer, and polyurethane, preferably a polyimide-triphenyl phosphate copolymer with flame-retardant properties. The anode current collector is preferably a composite current collector of copper and polyimide-triphenyl phosphate copolymer, such as a copper-plated composite current collector of polyimide-triphenyl phosphate. The anode current collector may have a thickness of 1-100 µm, preferably 1-10 µm.

This invention also includes an anode current collector with a coating. The coating on the anode current collector has a function to promote the dense deposition and growth of lithium metal on its surface and/or inhibit the corrosion of the deposited lithium metal. The coating can be one or an alloy of two or more of indium, cobalt, germanium, aluminum, tin, gold, silver, zinc, magnesium, silicon, bismuth, palladium, and platinum; or a non-metal of acetylene black, Ketjen black, carbon black, graphite, graphene, a conductive polymer, or an artificial interphase layer (artificial SEI), or a mixture of the above metal and non-metal.

### III. Electrolyte

In this invention, the electrolyte uses a boron-containing lithium salt as the main salt (another salt may also be contained) and a fluorinated amide compound as an organic solvent. In addition, the electrolyte may contain a functional additive (i.e. an electrolyte additive) as needed.

The boron-containing lithium salt may be one or two or more selected from lithium difluorooxalate borate (LiDFOB), lithium bioxalate borate (LiBOB), lithium tetrafluoroborate (LiBF₄), lithium fluoroalkoxyborate, lithium fluoroalkoxyfluoroborate, lithium fluoroalkoxydifluoroborate, and lithium fluoroalkoxytrifluoroborate, preferably lithium difluorooxalate borate(LiDFOB).

The fluorinated amide compound may be one or two or more selected from N,N-dimethyltrifluoroacetamide, N-methoxy-N-methyltrifluoroacetamide, N-methyltrifluoroacetamide, N,N-diethyltrifluoroacetamide, N-(trifluoromethanesulfonyl)trifluoroacetamide, N,O-bis(trimethylsilyl)trifluoroacetamide, N-methyl-N-(trimethylsilyl)trifluoroacetamide, bis(trimethylsilyl)trifluoroacetamide, N-methyltrimethylsilyltrifluoroacetamide, N-methyl-bis(trifluoroacetamide), trifluoroacetamide, and bistrifluoroacetamide, preferably N,N-dimethyltrifluoroacetamide.

Based on the total weight of the electrolyte, the boron-containing lithium salt may be contained in an amount of 5 wt% to 50 wt%, e.g., 10 wt% to 35 wt%. If the amount of lithium salt is less than 5 wt%, it will reduce the ionic conductivity of the electrolyte and affect the deposition of metallic lithium. If the amount of lithium salt exceeds 50 wt%, it will increase the cost and viscosity of the electrolyte and reduce its wettability to the electrodes and separator.

In some embodiments, the electrolyte comprises lithium difluorooxalate borate (LiDFOB) and N,N-dimethyltrifluoroacetamide, wherein the molar ratio of lithium difluorooxalate borate (LiDFOB) to N,N- dimethyltrifluoroacetamide is 1 : 5.

The functional additive can be a salt or an organic solvent, such as one or two or more selected from tris(2,2,2-trifluoroethyl)phosphite (TTFEP), 1,3,6-hexanetrionitrile (HTCN), fluorotoluene (FB), tris(trimethylsilyl)borate (TMSB), tris(trimethylsilyl)phosphate (TMSP), tris(trimethylsilyl)phosphite (TMSPi), hexamethyldisilazane (HMDS), 1,3-propene sultone (PRS), fluoroethylene carbonate (FEC), difluoroethylene carbonate (DFEC), bis(2,2,2-trifluoroethyl) carbonate (TFEC), fluoromethyl ethyl carbonate (FEMC), vinylene carbonate (VC), propylene sulfite (PS), 3,3,3-Trifluoropropylene Carbonate (TFPC), 1,3,2-dioxathiolane 2,2-dioxide (DTD), ethylene sulfite (ES), lithium difluorophosphate (LiDFP), lithium difluorobis(oxalato)phosphate (LiDODFP), lithium tetrafluoro(oxalato)phosphate (LiTFOP), lithium nitrate (LiNO₃), lithium hexafluorophosphate (LiPF₆), lithium perchlorate (LiClO₄), lithium trifluoromethanesulfonate (LiOTf), lithium bis(fluorosulfonyl)imide (LiFSI), lithium bis(trifluoromethanesulfonyl)imide (LiTFSI).

The functional additive may be introduced and determined its appropriate dosage by those skilled in the art according to the desired function. For example, based on the total weight of the electrolyte, the functional additive may be contained in an amount of 0.1 wt% to 10 wt%, preferably 0.5 wt% to 5 wt%.

### IV. Separator

In this invention, the separator is a physical separator that functions to physically separate electrodes, and a separator can be used without particular limitation, as long as it is a separator in a conventional lithium secondary battery. In particular, a separator with low resistance to ion migration in the electrolyte and excellent electrolyte wettability is preferred. Specifically, the separator may be a porous polymer membrane, such as a porous polymer membrane made from one of polyolefin polymers, such as ethylene homopolymer, propylene homopolymer, ethylene/butene copolymer, ethylene/hexene copolymer, and ethylene/methacrylate copolymer, or a composite porous polymer membrane made from two or more of these polymers, which may be used alone or in the form of a laminate. Alternatively, the separator may be a porous nonwoven fabric, such as a nonwoven fabric made from high-melting-point glass fiber, polyethylene terephthalate fiber, etc. The separator may contain a surface functional coating material, such as a ceramic-containing coating, a solid-state electrolyte coating, or a composite coating of two or more of the above coatings, but is not limited thereto. The ceramic may include aluminum oxide (Al₂O₃), magnesium oxide (MgO), titanium dioxide (TiO₂), zirconium dioxide (ZrO₂), silicon dioxide (SiO₂), and barium titanate (BaTiO₃), etc. The solid-state electrolyte may include lithium phosphorus oxynitride (LiPON), lithium zinc germanate (LISICON), lithium germanium phosphorus sulfide (LGPS), lithium phosphorus sulfide chloride (LPSCl), lithium aluminum titanium phosphate (LATP), lithium aluminum germanium phosphate (LAGP), lithium lanthanum zirconium oxide (LLZO), lithium lanthanum titanium oxide (LLTO), a halide solid-state electrolyte (LiₓMCl₆, where M is a metal element), polyethylene oxide (PEO), polysiloxane (PS), polypropylene carbonate (PPC), polyacrylonitrile (PAN), polyacrylate (PBA), polymethyl methacrylate (PMMA), and polyvinylidene fluoride (PVDF), etc.

In addition to the cathode, the anode, the separator, and the electrolyte mentioned above, the battery of the present invention may also include other structures as needed, such as a chip, a capacitor, a casing, etc.

The anode-free lithium metal battery according to the present invention is an anode-free lithium metal battery with high energy density and long cycle life. Here, "high energy density and long cycle life" means that the anode-free lithium metal battery according to the present invention has a significantly improved cycle life while maintaining or preserving a high energy density (>350 Wh/kg, or even >400 Wh/kg, >450 Wh/kg or >500 Wh/kg) of conventional anode-free lithium metal batteries.

According to another aspect of the present invention, provided is a method for preparing the anode-free lithium metal battery, comprising the steps of:
coating a composition for forming the cathode active material layer onto the cathode current collector to prepare the cathode;
mixing a composition comprising at least one boron-containing lithium salt and a fluorinated amide compound solvent to form the electrolyte;
assembling the cathode, the anode current collector, the electrolyte, and the separator to prepare the anode-free lithium metal battery.

The cathode may be prepared according to a conventional method, and specifically, it can be prepared by coating a cathode active material layer forming composition, prepared by mixing a cathode active material, a lithium replenishment agent, a conductive material and a binder in an organic solvent or water, onto a cathode current collector, followed by drying and optionally casting. In this case, the organic solvent can uniformly disperse the cathode active material, the lithium replenishment agent, the binder and the conductive material, and can be easily evaporated. Specifically, N-methylpyrrolidone, dimethylformamide, dimethoxyethane, acetonitrile, etc., can be used as the organic solvent.

According to another aspect of the invention, provided is use of the anode-free lithium metal battery in an electronic device, a smart grid, or an electric vehicle.

In the specification, the terms "comprising", "including", "having", "containing", or other similar terms are open-ended conjunctions intended to encompass non-exclusive inclusions. For example, a composition or article containing a plurality of elements is not limited to those listed herein but may also include other elements not explicitly listed but typically inherent to the composition or article. Furthermore, unless explicitly stated otherwise, the term "or" is inclusive, not exclusive. For example, the condition "A or B" is satisfied in any of the following cases: A is true (or exists) and B is false (or does not exist); A is false (or does not exist) and B is true (or exists); A and B are both true (or exist). Moreover, in this document, the terms "comprising", "including", "having" and "containing" should be interpreted as specifically disclosed and encompassing both closed and semi-closed conjunctions such as "consisting of" and "substantially consisting of".

In the specification, all features or conditions defined in the form of numerical ranges or percentage ranges are for the sake of brevity and convenience only. Accordingly, descriptions of numerical ranges or percentage ranges should be considered as covering and specifically disclosing all possible sub-ranges and individual values within those ranges, particularly integer values. For example, a range description of "1 to 8" should be considered as specifically disclosing all sub-ranges such as 1 to 7, 2 to 8, 2 to 6, 3 to 6, 4 to 8, 3 to 8, etc., particularly sub-ranges defined by all integer values, and should be considered as specifically disclosing individual values within those ranges such as 1, 2, 3, 4, 5, 6, 7, 8, etc. Unless otherwise specified, the foregoing interpretation applies to all content throughout this invention, regardless of its scope.

If a quantity or other numerical value or parameter is expressed as a range, preferred range, or a series of upper and lower limits, it should be understood that this document has specifically disclosed all ranges consisting of any upper or preferred value of that range and the lower or preferred value of that range, regardless of whether such ranges are disclosed separately. Furthermore, when a range of numerical values is mentioned herein, unless otherwise stated, the range shall include its endpoints and all integers and fractions within the range.

In the specification, numerical values are to be understood as having a precision with significant digits, provided that the purpose of the invention can be achieved. For example, the number 40.0 should be understood to cover a range from 39.50 to 40.49.

The above embodiments are merely exemplary embodiments of the present invention and are not intended to limit the present invention. The protection scope of the present invention is defined by the claims. Those skilled in the art can make various modifications or equivalent substitutions to the present invention within its spirit and protection scope, and such modifications or equivalent substitutions should also be considered to fall within the protection scope of the present invention.

### Beneficial effects

The invention has following beneficial effects:
(1) The present invention combines a fluorinated amide electrolyte with a lithium replenishment agent such that a dense thin lithium layer formed in situ on the anode current collector during the first charging can be served as a lithium reservoir, which can offset active lithium loss during the charge-discharge cycle, thus significantly improving the cycle stability of the anode-free lithium metal battery with little impact on the energy density.
(2) The anode-free lithium metal battery of the present invention combining a fluorinated amide electrolyte with a cathode lithium replenishment agent achieves a cycle life of 164 cycles in a Cu∥NCM811 anode-free lithium metal pouch cell with an energy density of 533 Wh kg⁻¹ (100% DoD); and a cycle life of 486 cycles in a Cu∥NCM811 anode-free lithium metal pouch cell with an energy density of 426 Wh kg⁻¹ (80% DoD) under practical conditions.

### Brief description of drawings

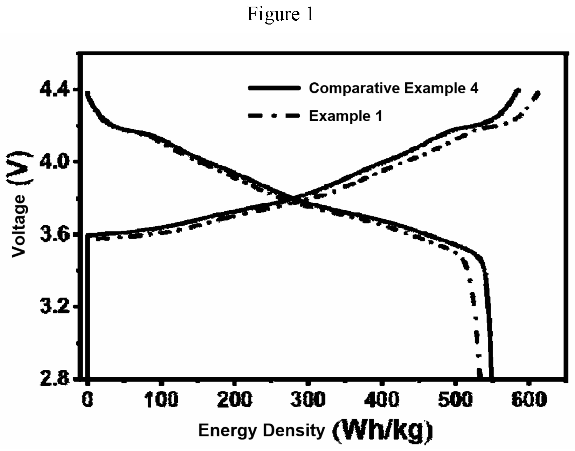

Figure 1 shows energy density-voltage curves at the first charge-discharge cycle of the anode-free lithium metal pouch cell assembled in Comparative Example 4 and Example 1 at room temperature, in a voltage window from 2.8 to 4.4 V.

### Detailed description of the invention

The object and the effect of the present invention will become clearer from the following detailed description with reference to the accompanying drawings and preferred embodiments. It should be understood that the specific examples described herein are for illustrative purposes only and are not intended to limit the scope of the invention.

### Preparation example:

### Assembly of an anode-free lithium metal pouch cell:

The pouch cell assembly was carried out in an order of stacking, tab welding, top and side sealing, electrolyte injection, and cell packaging. Electrolyte injection and cell packaging were performed inside a glove box and the cell packaging was performed on a vacuum pre-sealing machine.

Preparation of a cathode sheet: a cathode active material, a lithium replenishment agent, a binder and a conductive agent were made into a slurry, which was coated on both sides of a 12 µm thick aluminum foil and cut to a required size. The above materials were purchased from Shenzhen Kejing Star Technology Company.

The anode current collector was a 4 µm thick copper foil, purchased from Shenzhen Kejing Star Technology Company.

The separator was a 12 µm thick polyethylene (PE) separator, purchased from Celgard.

The aluminum tabs, nickel tabs, and 113 µm thick aluminum-plastic film was purchased from Shenzhen Kejing Star Technology Company.

### Preparation of electrolyte:

A localized high-concentration electrolyte was prepared from lithium bis(fluorosulfonyl)imide (LiFSI): dimethoxyethane (DME): 1,1,2,2-tetrafluoroethyl-2,2,3,3-tetrafluoropropyl ether (TTE) in a molar ratio of 1.0:1.2:3.0. Specifically, 1.50 g of lithium bis(fluorosulfonyl)imide (LiFSI) was dissolved in 1.0 mL of dimethoxyethane (DME) as a solvent to obtain a high-concentration electrolyte. Then, 1.0 mL of the high-concentration electrolyte was mixed with 1.93 mL of 1,1,2,2- tetrafluoroethyl-2,2,3,3-tetrafluoropropyl ether (TTE) as a solvent to obtain the localized high-concentration electrolyte comprising the lithium salt in a mass ratio of 19.0 wt%. This localized high-concentration electrolyte is the best-performing localized high-concentration electrolyte reported to date.

A fluorinated amide electrolyte was prepared by mixing lithium difluorooxalate borate (LiDFOB) and N,N-dimethyltrifluoroacetamide in a molar ratio of 1:5. Specifically, 0.25 g of lithium difluorooxalate borate (LiDFOB) was dissolved in 1.0 mL of N,N-dimethyltrifluoroacetamide as a solvent to obtain the fluorinated amide electrolyte comprising the lithium salt in a mass ratio of 17.2 wt%.

**Galvanostatic current charge-discharge test of anode-free lithium metal pouch cells:** The Neware battery testing system was used to test the batteries at a galvanostatic current within a set voltage range; the anode-free lithium metal pouch cells were placed in a clamp with a pressure of 200 kPa for testing. The cycle life of the battery is defined as the number of cycles when the capacity decreases to 80% of the initial discharge capacity obtained at 0.2C.

### Example 1

The cathode sheet was a 12 µm thick aluminum foil coated on both sides with a high-nickel ternary lithium nickel cobalt manganese oxide (Li[Ni_{0.8}Mn_{0.1}Co_{0.1}]O₂) (NCM811) cathode material layer, which consists of 90.0 wt.% NCM811 as a cathode active material, 7.5 wt.% Li₂NiO₂ as a lithium replenishment agent, 1.0 wt.% multi-walled carbon nanotubes as a conductive agent, and 1.5 wt.% polyvinylidene fluoride (PVDF) as a binder, in a single-sided coating areal density of 26.5 mg/cm². The anode was a 4 µm thick copper foil current collector without active material. The separator was a 12 µm thick polyethylene (PE) separator. The electrolyte injection and cell packaging were carried out in a glove box and the cell packaging was performed using a vacuum pre-sealing machine. The electrolyte was the above fluorinated amide electrolyte comprising the lithium salt in a mass ratio of 17.2 wt%. The electrolyte injection volume of the pouch cell was 1.5 g/Ah. The anode-free lithium metal pouch cell had a capacity of 2.62 Ah, corresponding to an energy density of 533 Wh/kg.

Electrochemical performance testing method: at a temperature of 25 °C in a voltage range of 2.8-4.4 V (100% DoD), long-cycle charge-discharge cycles were performed at a charge rate of 0.2C and a discharge rate of 0.5C after two cycles at a charge-discharge rate of 0.1C.

### Example 2

An anode-free lithium metal pouch cell was prepared the same as that in Example 1.

The electrochemical testing method differs from that in Example 1 in that the voltage range was set at 3.6-4.3 V (80% DoD).

### Example 3

The cathode sheet was a 12 µm thick aluminum foil coated on both sides with a lithium manganese iron phosphate (LiMn_{0.6}Fe_{0.4}PO₄) cathode material layer, which consists of 90.0 wt.% LMFP as a cathode active material, 5.0 wt.% Li₅FeO₄ as a lithium replenishment agent, 1.5 wt.% multi-walled carbon nanotubes as a conductive agent and 3.5 wt.% polyvinylidene fluoride (PVDF) as a binder, in a single-sided coating areal density of 17.5 mg/cm². The anode was a 4 µm thick copper foil current collector without active material. The separator was a 12 µm thick polyethylene (PE) separator. The electrolyte injection and cell packaging were carried out in a glove box and the cell packaging was performed using a vacuum pre-sealing machine. The electrolyte was the above fluorinated amide electrolyte comprising the lithium salt in a mass ratio of 17.2 wt%. The electrolyte injection volume for the pouch cell was 1.5 g/Ah. The anode-free lithium metal pouch cell had a capacity of 2.37 Ah, corresponding to an energy density of 370 Wh/kg.

Electrochemical performance testing method: at a temperature of 25 °C in a voltage range of 3.0-4.4 V (100% DoD), long-cycle charge-discharge cycles were performed at a charge rate of 0.2C and a discharge rate of 0.5C after two cycles at a charge-discharge rate of 0.1C.

### Comparative Example 1

The cathode sheet was a 12 µm thick aluminum foil coated on both sides with a high-nickel ternary lithium nickel cobalt manganese oxide (Li[Ni_{0.8}Mn_{0.1}Co_{0.1}]O₂ (NCM811) cathode material layer, which consists of 97.5 wt.% NCM811 as a cathode active material, 1.0 wt.% multi-walled carbon nanotubes as a conductive agent, and 1.5 wt.% polyvinylidene fluoride (PVDF) as a binder, in a single-sided coating areal density of 26.5 mg/cm². The anode was a 4 µm thick copper foil current collector without active material; the separator was a 12 µm thick polyethylene (PE) separator. The electrolyte injection and cell packaging were carried out in a glove box and the cell packaging was performed using a vacuum pre-sealing machine. The electrolyte is the above localized high-concentration electrolyte comprising the lithium salt in a mass ratio of 19.0 wt%. The electrolyte injection volume of the pouch cell was 1.5 g/Ah. The anode-free lithium metal pouch cell had a capacity of 2.7 Ah, corresponding to an energy density of 549 Wh/kg.

The electrochemical testing method is the same as that in Example 1.

### Comparative Example 2

An anode-free lithium metal pouch cell was prepared the same as Example 1 except that the electrolyte was replaced with the localized high-concentration electrolyte prepared above.

The electrochemical testing method is the same as that in Example 1.

### Comparative Example 3

An anode-free lithium metal pouch cell was prepared the same as that of Comparative Example 2.

The electrochemical testing method is the same as that in Example 1, except that the voltage range was set at 3.6-4.3 V (80% DoD).

### Comparative Example 4

An anode-free lithium metal pouch cell was prepared the same as Comparative Example 1 except that the electrolyte was replaced with the fluorinated amide electrolyte prepared above.

The electrochemical testing method is the same as that in Example 1.

### Comparative Example 5

The cathode sheet was a 12 µm thick aluminum foil coated on both sides with a lithium manganese iron phosphate (LiMn_{0.6}Fe_{0.4}PO₄, LMFP) cathode material layer, which consists of 95.0 wt.% LMFP as a cathode active material, 1.5 wt.% multi-walled carbon nanotubes as a conductive agent, and 3.5 wt.% polyvinylidene fluoride (PVDF) as a binder, in a single-sided coating areal density of 17.5 mg/cm². The anode was a 4 µm thick copper foil current collector without active material. The separator was a 12 µm thick polyethylene (PE) separator. The electrolyte injection and cell packaging were carried out in a glove box and the cell packaging was performed using a vacuum pre-sealing machine. The electrolyte was the above localized high-concentration electrolyte, and the electrolyte injection volume for the pouch cell was 1.5 g/Ah. The anode-free lithium metal pouch cell had a capacity of 2.4 Ah, corresponding to an energy density of 377 Wh/kg.

The electrochemical testing method is the same as that in Example 3.

### Comparative Example 6

An anode-free lithium metal pouch cell was prepared the same as Example 3 except that the electrolyte was replaced with the above localized high-concentration electrolyte.

The electrochemical testing method is the same as that in Example 3.

### Comparative Example 7

An anode-free lithium metal pouch cell was prepared the same as Comparative Example 5 except that the electrolyte was replaced with the fluorinated amide electrolyte prepared above.

The electrochemical testing method is the same as that in Example 3.

The test results of Examples 1-3 and Comparative Examples 1-7 are shown in Table 1.

**Table 1**

| | Amount of lithium replenishment agent (wt.%) | Electrolyte | Depth of discharge ( DoD,% ) | Energy density (Wh/kg) | Number of cycles (80% retention rate) |
|---|---|---|---|---|---|
| Example 1 | 7.5 | The fluorinated amide electrolyte | 100 | 533 | 164 |
| Example 2 | 7.5 | The fluorinated amide electrolyte | 80 | 426 | 486 |
| Example 3 | 5.0 | The fluorinated amide electrolyte | 100 | 370 | 145 |
| Comparative Example 1 | 0 | The localized high-concentration electrolyte | 100 | 549 | 39 |
| Comparative Example 2 | 7.5 | The localized high-concentration electrolyte | 100 | 533 | 56 |
| Comparative Example 3 | 7.5 | The localized high-concentration electrolyte | 80 | 426 | 92 |
| Comparative Example 4 | 0 | The fluorinated amide electrolyte | 100 | 549 | 80 |
| Comparative Example 5 | 0 | The localized high-concentration electrolyte | 100 | 377 | 31 |
| Comparative Example 6 | 5.0 | The localized high-concentration electrolyte | 100 | 370 | 45 |
| Comparative Example 7 | 0 | The fluorinated amide electrolyte | 100 | 377 | 75 |

As shown in Table 1, for the anode-free lithium metal pouch cells based on Li₂NiO₂ lithium replenishment agent, the cycle life is only increased by 43.6% in the case that the lithium replenishment agent is introduced into an anode-free lithium metal pouch cell using a localized high-concentration electrolyte (Comparative Examples 1-2), while the cycle life is increased by 105% in the case that the lithium replenishment agent is introduced into an anode-free lithium metal pouch cell with a fluorinated amide electrolyte (Example 1).

For the anode-free lithium metal pouch cell based on Li₅FeO₄ lithium replenishment agent, the cycle life is only improved by 45.2% in the case that the lithium replenishment agent is introduced into an anode-free lithium metal pouch cell with a localized high-concentration electrolyte (Comparative Examples 5-6), while the cycle life is increased by 93.3% compared to Comparative Example 7, in the case that the lithium replenishment agent is introduced into an anode-free lithium metal pouch cell with a fluorinated amide electrolyte (Example 3). Furthermore, Example 2 showed an improved cycle life by more than 5 times that of Comparative Example 3 under a depth of discharge of 80% when comparing the cycle life of the anode-free lithium metal pouch cell added with a lithium replenishment agent, indicating that the combination of a fluorinated amide electrolyte and a lithium replenishment agent can significantly extend the cycle life of the battery while maintaining its high energy density.

Figure 1 shows the energy density-voltage curves of the anode-free lithium metal pouch cells corresponding to Comparative Example 4 and Example 1 during the first charge-discharge cycle. Comparative Example 4 has a reversible efficiency of 93.7% during the first charge, corresponding to a discharge energy density of 549 Wh/kg. Example 1, due to the initial irreversibility of the lithium replenishment agent, has a reversible efficiency of 86.4% during the first charge, corresponding to an energy density of 533 Wh/kg. Therefore, the addition of 7.5% of lithium replenishment agent only decreased the battery energy density by 16 Wh/kg, and the high energy density characteristics of the anode-free lithium metal pouch cell (remaining at level of >500 Wh/kg) is hardly compromised.

## Claims

1. An anode-free lithium metal battery comprising:
a cathode comprising a cathode current collector and a cathode active material layer containing a lithium replenishment agent;
an anode current collector;
an electrolyte comprising at least one boron-containing lithium salt and a fluorinated amide compound solvent; and
a separator.

2. The anode-free lithium metal battery according to claim 1, wherein the cathode current collector is selected from a metal current collector, a non-metal current collector, or a metal-polymer composite current collector;
preferably, the metal current collector is one selected from or an alloy of two or more selected from aluminum, titanium, nickel, and iron, preferably aluminum foil; the non-metal current collector is one or two or more selected from carbon fiber cloth, carbon fiber paper, graphite paper, and conductive organic polymers, preferably carbon fiber paper; the polymer in the metal-polymer composite current collector is one or two or more selected from polycarbonate, polystyrene, polyethylene terephthalate, acrylonitrile-butadiene-styrene copolymer, polyvinyl chloride, polypropylene, polyethylene, polyvinylidene chloride, polybenzimidazole, ethylene-vinyl acetate copolymer, polyimide, polyimide-triphenyl phosphate copolymer, and polyurethane, and is preferably a composite current collector of aluminum and polyimide-triphenyl phosphate copolymer.

3. The anode-free lithium metal battery according to claim 1, wherein the cathode active material is one or two or more selected from a ternary lithium nickel-cobalt-manganese oxide cathode material, a lithium-rich manganese-based cathode material, a lithium nickel manganese oxide cathode material, a lithium iron phosphate cathode material, a lithium manganese oxide cathode material, a lithium manganese iron phosphate cathode material, a lithium cobalt oxide cathode material, and a lithium sulfide cathode material, preferably the ternary lithium nickel cobalt manganese oxide cathode material.

4. The anode-free lithium metal battery according to claim 1, wherein the lithium replenishment agent is one or two or more selected from binary lithium-containing compounds and lithium-rich compounds, the binary lithium-containing compound is one or two or more selected from Li₂O, Li₂O₂, Li₃N, Li₂S, Li₂C₂O₄, preferably Li₂C₂O₄; the lithium-rich compound is selected from Li₂Ni₁₋ₓMₓO₂ and Li₅Fe₁₋ₓNₓO₄, where 0 ≤ x < 1, and M is at least one selected from Mn, Fe, Co, Cu, Zn, Mg, and Cd, N is at least one selected from Mn, Ni, Co, Cu, Zn, Mg, and Cd, preferably the lithium replenishment agent is one or two of Li₂NiO₂ and Li₅FeO₄.

5. The anode-free lithium metal battery according to claim 1, wherein the anode current collector is selected from a metal current collector, a non-metal current collector, or a metal-polymer composite current collector;
preferably, the metal current collector is one selected from or an alloy of two or more selected from copper, nickel, cobalt, titanium and iron, preferably copper foil; the non-metal current collector is selected from one or two or more of carbon fiber cloth, carbon fiber paper, graphite paper, and conductive organic polymers, preferably graphite paper; the polymer in the metal-polymer composite current collector is selected from one or two or more of polycarbonate, polystyrene, polyethylene terephthalate, acrylonitrile-butadiene-styrene copolymer, polyvinyl chloride, polypropylene, polyethylene, polyvinylidene chloride, polybenzimidazole, ethylene-vinyl acetate copolymer, polyimide, polyimide-triphenyl phosphate copolymer, and polyurethane, and is preferably a composite current collector of copper and polyimide-triphenyl phosphate copolymer.

6. The anode-free lithium metal battery according to claim 5, wherein at least one side of the anode current collector has a coating, the coating is selected from a metal coating, a non-metal coating, or a metal-non-metal hybrid coating;
preferably, the metal is one selected from or an alloy of two or more selected from indium, cobalt, germanium, aluminum, tin, gold, silver, zinc, magnesium, silicon, bismuth, palladium and platinum, and the non-metal is one or two or more selected from acetylene black, Ketjen black, carbon black, graphite, graphene, a conductive polymer and an artificial interphase layer.

7. The anode-free lithium metal battery according to claim 1, wherein the boron-containing lithium salt is one or two or more selected from lithium difluorooxalate borate, lithium bioxalate borate, lithium tetrafluoroborate, lithium fluoroalkoxyborate, lithium fluoroalkoxyfluoroborate, lithium fluoroalkoxydifluoroborate, and lithium fluoroalkoxytrifluoroborate, preferably lithium difluorooxalate borate; and/or
the fluorinated amide compound is one or two or more selected from N,N-dimethyltrifluoroacetamide, N-methoxy-N-methyltrifluoroacetamide, N-methyltrifluoroacetamide, N,N-diethyltrifluoroacetamide, N-(trifluoromethanesulfonyl)trifluoroacetamide, N,O-bis(trimethylsilyl)trifluoroacetamide, N-methyl-N-(trimethylsilyl)trifluoroacetamide, bis (trimethylsilyl) trifluoroacetamide, N-methyltrimethylsilyltrifluoroacetamide, N-methylbis(trifluoroacetamide), trifluoroacetamide, and bistrifluoroacetamide, preferably N,N-dimethyltrifluoroacetamide;
preferably, the electrolyte comprises lithium difluorooxalate borate and N,N-dimethyltrifluoroacetamide, wherein the molar ratio of lithium difluorooxalate borate (LiDFOB) to N,N- dimethyltrifluoroacetamide is 1 : 5.

8. The anode-free lithium metal battery according to claim 1, wherein the separator is selected from a porous polyolefin polymer membrane and a porous nonwoven fabric,
furthermore, the separator has a ceramic coating or a solid electrolyte coating on at least one side.

9. A method for preparing the anode-free lithium metal battery according to any one of claims 1-8, comprising the steps of:
coating a composition for forming the cathode active material layer onto the cathode current collector to prepare the cathode;
mixing a composition comprising at least one boron-containing lithium salt and a fluorinated amide compound solvent for forming the electrolyte, so as to prepare the electrolyte;
assembling the cathode, the anode current collector, the electrolyte, and the separator to prepare the anode-free lithium metal battery.

10. Use of the anode-free lithium metal battery according to any one of claims 1-8 in an electronic device, a smart grid, or an electric vehicle.
